# EUROPEAN PATENT SPECIFICATION

(11) **EP 4 350 454 B1**
(45) Date of publication and mention of the grant of the patent: **09.07.2025**
(21) Application number: 23198771.0
(22) Date of filing: 21.09.2023
(51) Int. Cl.: A01B 69/04, G05D 105/15, G05D 107/20, G05D 109/10, G05D 1/81

(54) **TRAVELING CONTROL METHOD, TRAVELING CONTROL SYSTEM, AND TRAVELING CONTROL PROGRAM**
FAHRSTEUERUNGSVERFAHREN, FAHRSTEUERUNGSSYSTEM UND FAHRSTEUERUNGSPROGRAMM
PROCÉDÉ DE COMMANDE DE DÉPLACEMENT, SYSTÈME DE COMMANDE DE DÉPLACEMENT ET PROGRAMME DE COMMANDE DE DÉPLACEMENT

(30) Priority: 03.10.2022 JP 2022159325
(43) Date of publication of application: 10.04.2024
(73) Proprietor: Yanmar Holdings Co., Ltd., Osaka-shi, Osaka (JP)
(72) Inventor: MIYAMOTO, Shinnosuke, Okayama-shi (JP)
(74) Representative: Dennemeyer & Associates S.A.

(56) References cited:
- US-B1- 10 324 463

## Description

### TECHNICAL FIELD

The present invention relates to a traveling control method, a traveling control system, and a traveling control program that cause a work vehicle to autonomously travel in accordance with a target route in a field or the like.

### BACKGROUND ART

Conventionally, as a work vehicle capable of autonomously traveling, there is known a work vehicle that autonomously travels in accordance with a target route only when traveling straight ahead and travels (manually travels) in response to manual steering (manual operation) by an operator when turning. Moreover, there is known a technique for outputting buzzer sound in order to prompt an operator to perform a switching operation from autonomous traveling to manual traveling when a vehicle approaches an end point of a straight route of autonomous traveling (for example, refer to Patent Document 1).

### PRIOR ART DOCUMENT

### PATENT DOCUMENT

Patent Document 1: Japanese Unexamined Patent Application Publication No. 2015-112071

Another example of the application in this field is described in US10324463B1.

### SUMMARY OF INVENTION

### TECHNICAL PROBLEM

In a work vehicle that performs work while switching between autonomous traveling and manual traveling, an operator needs to temporarily stop the vehicle or stop an action of a work machine when switching from the autonomous traveling to the manual traveling. In the conventional art, since the operator needs to perform a predetermined operation when switching from the autonomous traveling to the manual traveling, there is such a problem that it takes time and effort or the operator forgets to perform the predetermined operation without noticing the buzzer sound.

An object of the present invention is to provide a traveling control method, a traveling control system, and a traveling control program that can improve the operability of an operator in a work vehicle that performs work while switching between autonomous traveling and manual traveling.

### SOLUTION TO PROBLEM

A traveling control method according to the present invention executes: accepting, from a user, an operation to set each of a plurality of action items related to actions to be executed by a work vehicle when the work vehicle reaches a predetermined position corresponding to an end point of a work route on which the work vehicle is caused to autonomously travel; and setting each of the plurality of action items on the basis of the operation of the user.

A traveling control system according to the present invention includes an acceptance processing unit and a setting processing unit. The acceptance processing unit accepts, from a user, an operation to set each of a plurality of action items related to actions to be executed by a work vehicle when the work vehicle reaches a predetermined position corresponding to an end point of a work route on which the work vehicle is caused to autonomously travel. The setting processing unit sets each of the plurality of action items on the basis of the operation of the user.

A traveling control program according to the present invention is a traveling control program for causing one or more processors to execute: accepting, from a user, an operation to set each of a plurality of action items related to actions to be executed by a work vehicle when the work vehicle reaches a predetermined position corresponding to an end point of a work route on which the work vehicle is caused to autonomously travel; and setting each of the plurality of action items on the basis of the operation of the user.

### ADVANTAGEOUS EFFECTS OF INVENTION

According to the present invention, a traveling control method, a traveling control system, and a traveling control program that can improve the operability of an operator in a work vehicle that performs work while switching between autonomous traveling and manual traveling can be provided.

### BRIEF DESCRIPTION OF DRAWINGS

FIG. 1 is a block diagram illustrating a configuration of a work vehicle according to an embodiment of the present invention.
FIG. 2 is an external view illustrating an example of the work vehicle according to the embodiment of the present invention.
FIG. 3 is an external view illustrating an example of an operation device according to the embodiment of the present invention.
FIG. 4A is a diagram illustrating an example of an operation screen displayed on the operation device according to the embodiment of the present invention.
FIG. 4B is a diagram illustrating an example of the operation screen displayed on the operation device according to the embodiment of the present invention.
FIG. 5A is a diagram for explaining a route generation method according to the embodiment of the present invention.
FIG. 5B is a diagram for explaining the route generation method according to the embodiment of the present invention.
FIG. 5C is a diagram for explaining the route generation method according to the embodiment of the present invention.
FIG. 6 is a diagram illustrating an example of a target route according to the embodiment of the present invention.
FIG. 7 is a diagram illustrating an example of a setting screen displayed on the operation device according to the embodiment of the present invention.
FIG. 8 is a diagram illustrating an example of a travel screen displayed on the operation device according to the embodiment of the present invention.
FIG. 9 is a diagram illustrating an example of the setting screen displayed on the operation device according to the embodiment of the present invention.
FIG. 10 is a diagram illustrating an example of the setting screen displayed on the operation device according to the embodiment of the present invention.
FIG. 11 is a diagram illustrating an example of the setting screen displayed on the operation device according to the embodiment of the present invention.
FIG. 12 is a flowchart illustrating an example of a procedure of autonomous traveling processing to be executed by the work vehicle according to the embodiment of the present invention.
FIG. 13 is a diagram illustrating an example of the setting screen displayed on the operation device according to the embodiment of the present invention.
FIG. 14 is a diagram illustrating an example of the setting screen displayed on the operation device according to the embodiment of the present invention.
FIG. 15 is a diagram illustrating an example of the setting screen displayed on the operation device according to the embodiment of the present invention.

### DESCRIPTION OF EMBODIMENTS

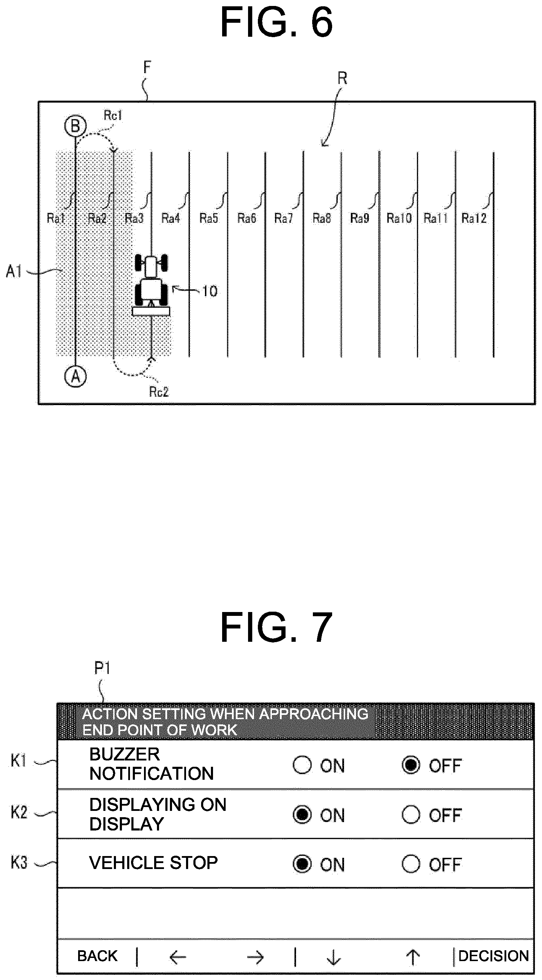

An autonomous traveling system according to an embodiment of the present invention (an example of the traveling control system of the present invention) includes a work vehicle 10, a satellite (not illustrated), and a base station (not illustrated). In the present embodiment, a case where the work vehicle 10 is a tractor will be described as an example. As another embodiment, the work vehicle 10 may be a rice transplanter, a combine harvester, a construction machine, a snowplow, or the like. In response to an operation of an operator (user), the work vehicle 10 performs predetermined work (for example, tillage work) while traveling in accordance with a target route in a field F (refer to FIG. 6). Specifically, the work vehicle 10 travels straight ahead on the target route in response to autonomous steering and travels while turning in response to manual steering (driving operation) by the operator. The work vehicle 10 travels in the field F and performs work while switching between autonomous traveling on a straight route and manual traveling on a turning route. The target route may be generated in advance on the basis of the operation of the operator and stored as route data.

The work vehicle 10 travels in the field F illustrated in FIG. 6, for example, while repeating straight traveling and turning traveling until the work is finished. A target route R for autonomous traveling includes a plurality of straight routes (work routes). The plurality of work routes are substantially parallel to one another. FIG. 6 illustrates work routes Ra1 to Ra12. For example, the work vehicle 10 sequentially executes autonomous traveling on the work route Ra1, manual traveling on a turning route Rc1, autonomous traveling on the work route Ra2, manual traveling on a turning route Rc2, and autonomous traveling on the work route Ra3. A reference sign A1 illustrated in FIG. 6 indicates a work trajectory (worked area) in which the work vehicle 10 has traveled and performed work.

The target route R illustrated in FIG. 6 is an example, and the target route R is appropriately determined according to a size of the work vehicle 10, a width of a work machine 14 (work width), a width in which adjacent work areas overlap each other (lap width), work contents, a shape of the field F, and the like.

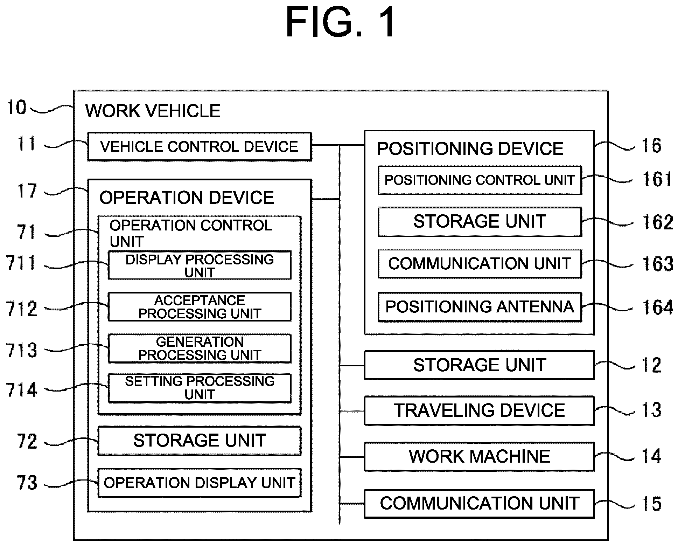

The autonomous traveling system may include an operation terminal (a tablet terminal, a smartphone, or the like) that is operated by the operator. The operation terminal can communicate with the work vehicle 10 via a communication network such as a cellular telephone line network, a packet line network, or a wireless LAN. For example, the operator performs an operation to register various types of information (work vehicle information, field information, work information, and the like) on the operation terminal. Moreover, in a location away from the work vehicle 10, the operator can grasp traveling conditions, work conditions, and the like of the work vehicle 10 by a traveling trajectory displayed on the operation terminal. The operation terminal may be an operation device 17 (refer to FIG. 1) arranged in the work vehicle 10.

### [Work Vehicle 10]

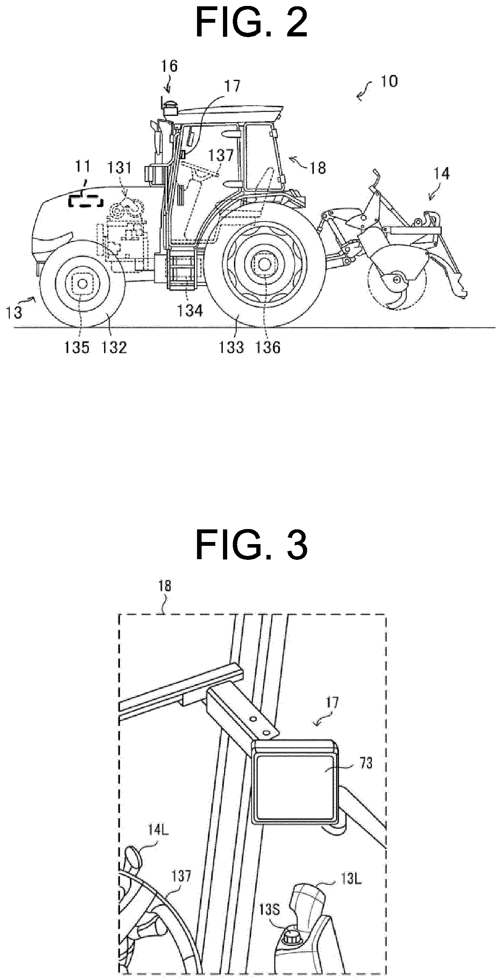

As illustrated in FIG. 1 and FIG. 2, the work vehicle 10 includes a vehicle control device 11, a storage unit 12, a traveling device 13, the work machine 14, a communication unit 15, a positioning device 16, and the operation device 17. The vehicle control device 11 is electrically connected to the storage unit 12, the traveling device 13, the work machine 14, the positioning device 16, the operation device 17, and the like. The vehicle control device 11 and the positioning device 16 may be capable of performing wireless communication. Moreover, the vehicle control device 11 and the operation device 17 may be capable of performing wireless communication.

The communication unit 15 is a communication interface that connects the work vehicle 10 to a communication network by wire or wirelessly and executes data communication in accordance with a predetermined communication protocol with an external device (an operation terminal or the like) via the communication network.

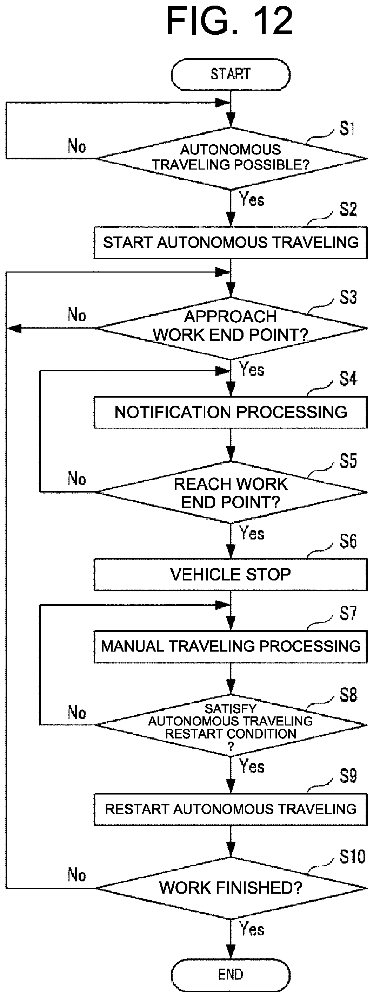

The storage unit 12 is a non-volatile storage unit such as a hard disk drive (HDD) or a solid state drive (SSD) that stores various types of information. The storage unit 12 stores a control program such as an autonomous traveling program for causing the vehicle control device 11 to execute autonomous traveling processing described below (refer to FIG. 12). For example, the autonomous traveling program is non-transiently recorded on a computer-readable recording medium such as a CD or a DVD and is read out by a predetermined reading device (not illustrated) to be stored in the storage unit 12. The autonomous traveling program may be downloaded from a server (not illustrated) to the work vehicle 10 via a communication network to be stored in the storage unit 12. Moreover, the storage unit 12 may store data of the target route generated in the operation device 17.

The traveling device 13 is a driving unit that causes the work vehicle 10 to travel. As illustrated in FIG. 2, the traveling device 13 includes an engine 131, front wheels 132, rear wheels 133, a transmission 134, a front axle 135, a rear axle 136, and a steering wheel 137. Both the front wheels 132 and the rear wheels 133 are provided on the right and left of the work vehicle 10. Moreover, the traveling device 13 is not limited to a wheel type including the front wheels 132 and the rear wheels 133 and may be a crawler type including crawlers provided on the right and left of the work vehicle 10.

The engine 131 is a driving source such as a diesel engine or a gasoline engine driven by using fuel supplied to a non-illustrated fuel tank. The traveling device 13 may include an electric motor as a driving source, together with the engine 131 or instead of the engine 131. A non-illustrated power generator is connected to the engine 131, and electric power is supplied from the power generator to electric components such as the vehicle control device 11, a battery, and the like which are provided in the work vehicle 10. The battery is charged by the electric power supplied from the power generator. The electric components such as the vehicle control device 11, the positioning device 16, and the operation device 17 provided in the work vehicle 10 can be driven by the electric power supplied from the battery even after the engine 131 is stopped.

Driving force of the engine 131 is transmitted to the front wheels 132 via the transmission 134 and the front axle 135 and is transmitted to the rear wheels 133 via the transmission 134 and the rear axle 136. Moreover, the driving force of the engine 131 is also transmitted to the work machine 14 via a PTO shaft (not illustrated). The traveling device 13 performs a traveling action according to a command of the vehicle control device 11.

The work machine 14 is, for example, a tiller, a seeder, a mower, a plow, or a fertilizer applicator and is detachably mounted to the work vehicle 10. Accordingly, the work vehicle 10 can perform various types of work using the respective work machines 14. FIG. 2 illustrates a case where the work machine 14 is a tiller.

In the work vehicle 10, the work machine 14 may be supported by a non-illustrated lifting-lowering mechanism so as to be lifted and lowered. The vehicle control device 11 can lift and lower the work machine 14 by controlling the lifting-lowering mechanism. For example, the vehicle control device 11 lowers the work machine 14 when the operator performs, by a lifting-lowering lever 14L (an example of a lifting-lowering operation tool of the present invention) (refer to FIG. 3), an operation to lower the work machine 14 (for example, an operation to place the lifting-lowering lever 14L in a "lowering" position) and lifts the work machine 14 when the operator performs, by the lifting-lowering lever 14L, an operation to lift the work machine 14 (for example, an operation to place the lifting-lowering lever 14L in a "lifting" position). The lifting-lowering lever 14L is provided, for example, near the steering wheel 137 (refer to FIG. 3), but may be provided at another position in a cabin 18.

Moreover, the vehicle control device 11 outputs a work stop command to the work machine 14 when acquiring a work stop instruction. When acquiring the work stop instruction, the vehicle control device 11 stops driving of the PTO shaft to stop an action (work) of the work machine 14.

The steering wheel 137 is an operation unit operated by the operator or the vehicle control device 11. For example, the traveling device 13 changes an angle of the front wheels 132 by a hydraulic power steering mechanism (not illustrated) or the like in response to the operation of the steering wheel 137 by the operator or the vehicle control device 11 to change a direction of movement of the work vehicle 10.

Moreover, the traveling device 13 includes a main speed change lever 13L (refer to FIG. 3), a PTO switch 13S, a reverser lever, a shift lever, an accelerator, a clutch, and a brake. For example, the traveling device 13 increases a speed of the work vehicle 10 when the operator performs, by the main speed change lever 13L (an example of a speed operation tool of the present invention), a speed-increasing operation to increase the speed of the work vehicle 10 (for example, an operation to tilt the main speed change lever 13L backward) and decreases the speed of the work vehicle 10 when the operator performs, by the main speed change lever 13L, a speed-decreasing operation to decrease the speed of the work vehicle 10 (for example, an operation to tilt the main speed change lever 13L forward). The reverser lever is an operation tool for switching between forward movement and backward movement of the work vehicle 10 (an example of a direction operation tool of the present invention) and can be set to "forward," "neutral," and "backward."

Moreover, for example, the traveling device 13 transmits the driving force of the engine 131 to the work machine 14 via the PTO shaft to activate the work machine 14 when the operator performs an operation to set the PTO switch 13S (an example of a switching operation tool of the present invention) to ON (for example, an operation to place the PTO switch 13S in an "ON" position) and blocks the transmission of the driving force from the engine 131 to the work machine 14 to stop the action of the work machine 14 when the operator performs an operation to set the PTO switch 13S to OFF (for example, an operation to place the PTO switch 13S in an "OFF" position).

Moreover, the traveling device 13 brakes rotations of the front wheels 132 and the rear wheels 133 in response to an operation of the brake using an electromagnetic brake. Moreover, the traveling device 13 switches a gear of the transmission 134 to a forward gear, a backward gear, or the like in response to an operation of the shift lever and switches a traveling mode of the work vehicle 10 to forward, backward, or the like. Moreover, the traveling device 13 controls a rotation speed of the engine 131 in response to an operation of the accelerator. Moreover, the traveling device 13 brakes rotations of the front wheels 132 and the rear wheels 133 in response to an operation of the brake using an electromagnetic brake.

The above-described various operation tools for causing the work vehicle 10 to execute predetermined actions by the operator, such as the main speed change lever 13L, the PTO switch 13S, the reverser lever, the shift lever, the accelerator, the clutch, and the brake, are examples of the operation tools of the present invention.

The positioning device 16 is a communication device including a positioning control unit 161, a storage unit 162, a communication unit 163, and a positioning antenna 164. For example, as illustrated in FIG. 2, the positioning device 16 is provided on an upper portion of the cabin 18 where the operator boards. Moreover, an installation location of the positioning device 16 is not limited to the cabin 18. Furthermore, the positioning control unit 161, the storage unit 162, the communication unit 163, and the positioning antenna 164 of the positioning device 16 may be separately arranged at different positions in the work vehicle 10. As described above, the battery is connected to the positioning device 16, so that the positioning device 16 can operate even when the engine 131 is stopped. Moreover, as the positioning device 16, for example, a mobile phone terminal, a smartphone, a tablet terminal, or the like may be substituted.

The positioning control unit 161 is a computer system that includes one or more processors and a storage memory such as a non-volatile memory or a RAM. The storage unit 162 is a non-volatile memory or the like that stores a positioning control program for causing the positioning control unit 161 to execute positioning processing and data such as positioning information and movement information. For example, the positioning control program is non-transiently recorded on a computer-readable recording medium such as a CD or a DVD and is read out by a predetermined reading device (not illustrated) to be stored in the storage unit 162. The positioning control program may be downloaded from a server (not illustrated) to the positioning device 16 via a communication network to be stored in the storage unit 162.

The communication unit 163 is a communication interface that connects the positioning device 16 to a communication network by wire or wirelessly and executes data communication in accordance with a predetermined communication protocol with an external device such as a base station server via the communication network.

The positioning antenna 164 is an antenna that receives a radio wave (GNSS signal) transmitted from a satellite.

The positioning control unit 161 calculates a current position of the work vehicle 10 on the basis of GNSS signals that the positioning antenna 164 receives from satellites. For example, when the positioning antenna 164 receives, while the work vehicle 10 autonomously travels in the field F, radio waves (transmission time, orbit information, and the like) respectively transmitted from a plurality of satellites, the positioning control unit 161 calculates a distance between the positioning antenna 164 and each satellite and calculates a current position (latitude and longitude) of the work vehicle 10 on the basis of the calculated distance. Moreover, the positioning control unit 161 may perform positioning by a real-time kinematic method (RTK-GNSS positioning method (RTK method)) which calculates the current position of the work vehicle 10 using correction information corresponding to a base station (reference station) near the work vehicle 10. As described above, the work vehicle 10 autonomously travels using positioning information by the RTK method. The current position of the work vehicle 10 may be the same as the positioning position (for example, the position of the positioning antenna 164) or may be a position deviated from the positioning position.

The operation device 17 is a device that is operated by the operator boarding the work vehicle 10, and displays various types of information and accepts operations of the operator. Specifically, the operation device 17 displays various setting screens to accept various setting operations from the operator and displays information about the traveling work vehicle 10. A specific configuration of the operation device 17 will be described below.

The vehicle control device 11 has control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information and is used as a temporary storage memory (work area) for various types of processing executed by the CPU. The vehicle control device 11 controls the work vehicle 10 by causing the CPU to execute various control programs stored in advance in the ROM or the storage unit 12. Moreover, the vehicle control device 11 causes the CPU to execute various types of processing in accordance with the autonomous traveling program.

Specifically, the vehicle control device 11 controls the traveling of the work vehicle 10. For example, when a traveling mode of the work vehicle 10 is manual traveling (manual traveling mode), the vehicle control device 11 causes the work vehicle 10 to manually travel on the basis of an operation of the operator (manual steering). For example, the vehicle control device 11 acquires operation information corresponding to driving operations by the operator, such as a steering wheel operation, a speed change operation, a shift operation, an accelerator operation, and a brake operation, and causes the traveling device 13 to execute the traveling action on the basis of the operation information.

Moreover, when the traveling mode of the work vehicle 10 is autonomous traveling (autonomous traveling mode), the vehicle control device 11 causes the work vehicle 10 to autonomously travel on the basis of position information (positioning information) indicating the current position of the work vehicle 10 positioned by the positioning control unit 161. For example, when the work vehicle 10 satisfies an autonomous traveling start condition and acquires a traveling start instruction from the operator, the vehicle control device 11 starts the autonomous traveling of the work vehicle 10 on the basis of the positioning information. Moreover, the vehicle control device 11 causes the work vehicle 10 to autonomously travel in accordance with the target route R (work route) (refer to FIG. 6) generated in advance.

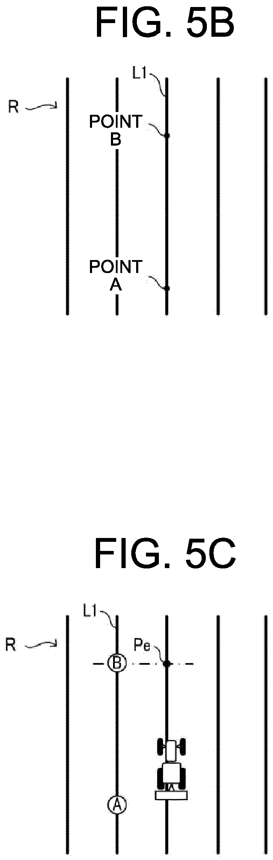

Moreover, when the work vehicle 10 reaches an end (end point) of the work route, the vehicle control device 11 switches the traveling mode to the manual traveling. The vehicle control device 11 may switch the traveling mode to the manual traveling when determining that the work vehicle 10 has reached the end point or may switch the traveling mode to the manual traveling in response to an operation of the operator. When the traveling mode is switched to the manual traveling, for example, the operator causes the work vehicle 10 to travel while turning (manually travel) by manual steering (refer to FIG. 6). The position of the end point of each work route is a position inside an end of the field F by a predetermined distance, a position specified in advance by the operator, a position aligned with the position where the operator has switched from the autonomous traveling to the manual traveling on an immediately preceding worked route (a position where the work route intersects with a line which passes through the position where the switching to the manual traveling has performed and is perpendicular to the worked route, or a position where the work route intersects with a line which passes through the position where the switching to the manual traveling has performed and is parallel to an edge line of the field F), a position where the work route intersects with a line which passes through the point B of the reference line L1 and is perpendicular to the reference line L1 (for example, position Pe in FIG. 5C), or the like.

The end point of each work route on which the work vehicle 10 is caused to autonomously travel corresponds to a position of a start point of a non-work route (turning route) on which the work vehicle 10 is caused to manually travel, and a start point of each work route corresponds to a position of an end point of the non-work route (turning route).

As described above, the vehicle control device 11 switches the traveling mode in response to an operation by the operator on the operation device 17 to cause the work vehicle 10 to autonomously travel on the work route (target route R) by autonomous steering and to manually travel on the non-work route (turning route) by manual steering. Although details will be described below, the vehicle control device 11 causes the work vehicle 10 to execute actions (a sound emission action, a display action, a traveling control action, and the like) according to setting operations of the operator at the end point of each work route.

### [Operation Device 17]

As illustrated in FIG. 1, the operation device 17 includes an operation control unit 71, a storage unit 72, and an operation display unit 73. The operation device 17 may be a device that is detachably mounted to the work vehicle 10. Moreover, the operation device 17 may be a portable terminal (a tablet terminal, a smartphone, or the like) that can be carried by the operator. The operation device 17 is communicably connected to the vehicle control device 11 by wire or wirelessly.

The operation display unit 73 is a user interface including a display unit such as a liquid crystal display or an organic EL display, which displays various types of information, and an operation unit such as operation buttons or a touch panel, which accepts operations. The operation display unit 73 displays various setting screens, operation screens, travel screens, and the like in accordance with instructions of the operation control unit 71. Moreover, the operation display unit 73 accepts an operation of the operator on each of the screens.

Moreover, the operation unit includes an autonomous traveling button with which the operator issues a traveling start instruction when causing the work vehicle 10 to start autonomous traveling, a shift button with which a correction operation (shift operation) for correcting a positional deviation between the work vehicle 10 and the target route is performed, and a plurality of selection buttons with which a selection operation is performed on each screen (all are not illustrated). These operation buttons may be physical buttons or electronic image buttons displayed on a touch panel.

For example, as illustrated in FIG. 2 and FIG. 3, the operation device 17 is installed near the steering wheel 137 in the cabin 18.

The storage unit 72 is a non-volatile storage unit such as an HDD or an SSD that stores various types of information. The storage unit 72 stores a control program for causing the operation device 17 to execute various types of processing. For example, the control program is non-transiently recorded on a computer-readable recording medium such as a CD or a DVD and is read out by a predetermined reading device (not illustrated) to be stored in the storage unit 72. The control program may be downloaded from a server (not illustrated) to the operation device 17 via a communication network to be stored in the storage unit 72. Moreover, the control program may be stored in the storage unit 12 of the work vehicle 10. Moreover, the storage unit 72 may store data of the target route generated in the operation device 17. The control program may include a route generation program for generating a target route.

The operation control unit 71 has control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information and is used as a temporary storage memory (work area) for various types of processing executed by the CPU. The operation control unit 71 controls the operation device 17 by causing the CPU to execute various control programs stored in advance in the ROM or the storage unit 72.

Specifically, as illustrated in FIG. 1, the operation control unit 71 includes various processing units such as a display processing unit 711, an acceptance processing unit 712, a generation processing unit 713, and a setting processing unit 714. The operation device 17 functions as the various processing units by causing the CPU to execute various types of processing in accordance with the control programs. Moreover, some or all of the processing units may be configured by an electronic circuit. The control programs may be programs for causing a plurality of processors to function as the processing units.

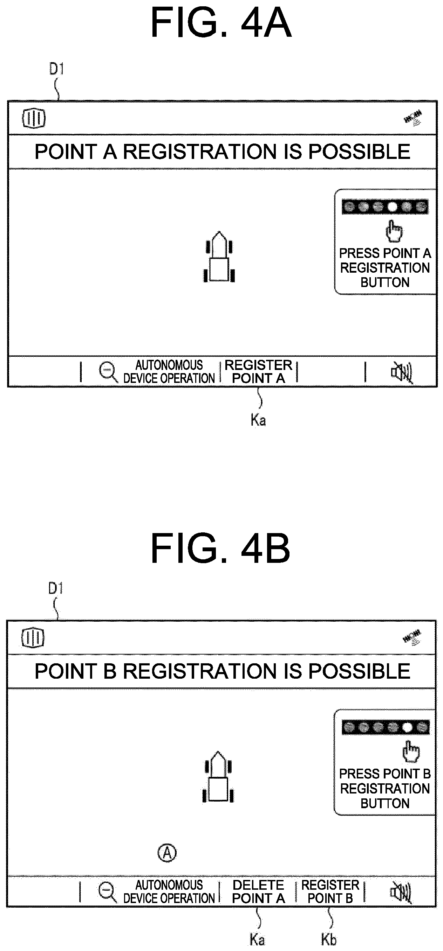

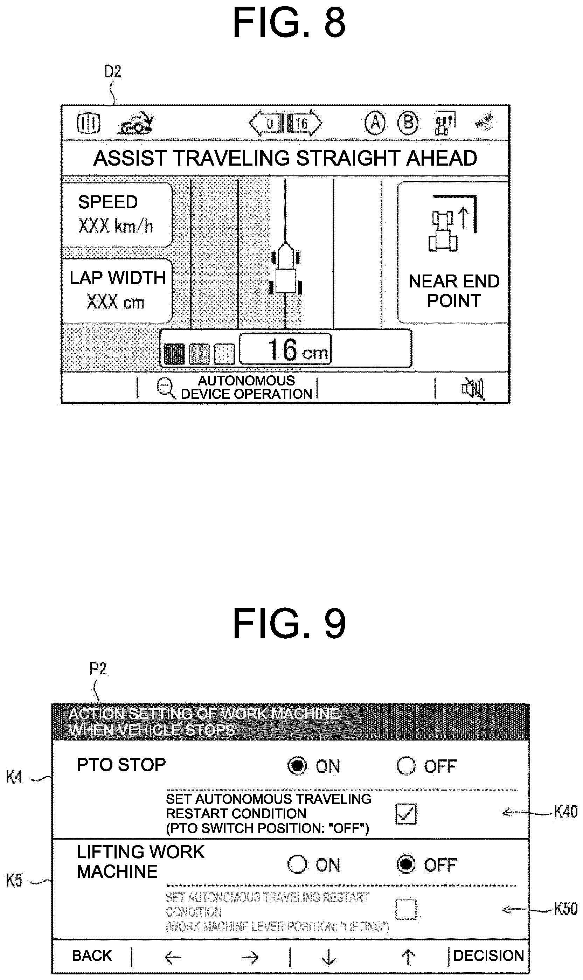

The display processing unit 711 displays various types of information on the operation display unit 73. For example, the display processing unit 711 displays on the operation display unit 73 a setting screen for performing various settings (for example, setting screens P1 to P3 in FIG. 7 and FIG. 9 to FIG. 11), an operation screen when a target route is generated (for example, operation screen D1 in FIG. 4A and FIG. 4B), a travel screen that displays traveling information such as traveling conditions and work conditions of the work vehicle 10 (for example, travel screen D2 in FIG. 8), and the like.

The acceptance processing unit 712 accepts various operations by the operator. For example, the acceptance processing unit 712 accepts, from the operator, an operation to input setting information for causing the work vehicle 10 to autonomously travel on each of the setting screens and accepts, from the operator, an operation to generate the target route, that is, various operations related to route generation work on each of the operation screens.

The generation processing unit 713 generates the target route R on which the work vehicle 10 is caused to autonomously travel. For example, the generation processing unit 713 generates the target route R including a plurality of straight routes (work routes) arranged at predetermined intervals (regular intervals) on the basis of the reference line L1 passing through the point A (first reference point) and the point B (second reference point) in the field F.

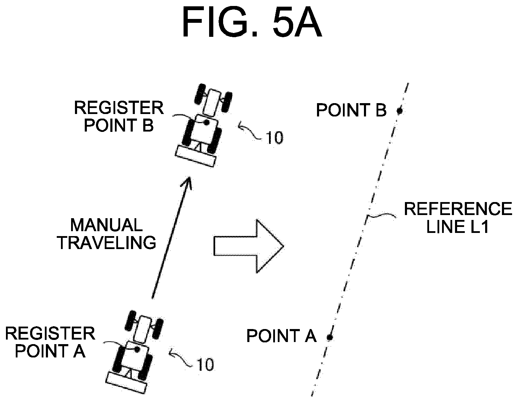

Hereinafter, an example of a procedure for generating the target route R will be described. For example, the display processing unit 711 displays on the operation display unit 73 the operation screen D1 (refer to FIG. 4A) that accepts, from the operator, a setting operation to set the reference line L1. The operator moves the work vehicle 10 to a desired position in the field F and presses a point A registration button Ka. For example, the operator moves the work vehicle 10 to an outer peripheral end of the field F and presses the point A registration button Ka. When the operator presses the point A registration button Ka, the generation processing unit 713 registers the current position of the work vehicle 10 as a first reference point (point A). When the generation processing unit 713 registers the point A, the display processing unit 711 displays on the operation display unit 73 the operation screen D1 (refer to FIG. 4B) that accepts a registration operation of a second reference point (point B). The operator causes the work vehicle 10 to manually travel in a direction (target direction) in which the work vehicle 10 is desired to travel and work (refer to FIG. 5A). Specifically, the operator causes the work vehicle 10 to travel straight ahead in a direction parallel to a work direction (for example, tillage direction) when the work vehicle 10 works in the work area. At this time, the work vehicle 10 may perform predetermined work (for example, tillage work) while manually traveling. Then, the operator presses a point B registration button Kb (refer to FIG. 4B) at a desired position (for example, the outer peripheral end of the field F). When the operator presses the point B registration button Kb, the generation processing unit 713 registers the current position of the work vehicle 10 as a second reference point (point B).

When the generation processing unit 713 acquires position information of the point A and the point B, a straight line passing through the point A and the point B is set as the reference line L1 (refer to FIG. 5A). The generation processing unit 713 may be capable of adjusting an orientation of the generated reference line L1. For example, the generation processing unit 713 displays the generated reference line L1 on the operation screen D1 and sets (registers) the reference line L1 when the registration operation is accepted from the operator. In contrast, when accepting an operation to change the orientation of the reference line L1 (for example, a screen touch operation) from the operator, the generation processing unit 713 adjusts the orientation of the reference line L1 in response to the operation. When accepting the operation to register the point B, the generation processing unit 713 may display a selection screen for registering or adjusting the reference line L1.

The generation processing unit 713 generates a travel route (target route R) including the reference line L1 and a plurality of straight lines parallel to the reference line L1. For example, the generation processing unit 713 generates a plurality of parallel straight lines at regular intervals with reference to the reference line L1 on the basis of a work width (a lateral width of the work machine 14) and a lap width (a width that overlaps an adjacent worked area) set in advance (refer to FIG. 5B). The generation processing unit 713 registers the generated target route R in the storage unit 72 and displays the generated target route R on the operation display unit 73.

According to the above-described method, the target route R can be generated using the reference line L1 passing through the two points (point A and point B) at both ends of the field F, thereby improving the accuracy of work by the work vehicle 10. The generation processing unit 713 may be capable of registering the point B when the work vehicle 10 has traveled a predetermined distance (for example, 5 m) after registering the point A. Accordingly, a more accurate reference line L1 can be set.

The generation method of the target route R is not limited to the above-described method, and may be, for example, a method of generating the target route R on the basis of a reference line generated from the point A and an orientation of the work vehicle ("point A + vehicle azimuth angle") or a method of generating the target route R on the basis of a reference line generated from the point A and a set azimuth angle ("point A + set azimuth angle").

After the target route R is generated, the operator issues an instruction to the work vehicle 10 to start autonomous traveling in the field F (traveling start instruction). When the work vehicle 10 satisfies the autonomous traveling start condition, thereby being in a state where autonomous traveling is possible, for example, when the work vehicle 10 is positioned within a predetermined distance from the target route R and within a predetermined orientation relative to the target route R (refer to FIG. 5C), the operator can press the autonomous traveling button (not illustrated) of the operation display unit 73 to issue the traveling start instruction.

When the operator issues the traveling start instruction, the vehicle control device 11 accepts the traveling start instruction and starts autonomous steering of the work vehicle 10 such that the work vehicle 10 travels along the target route R. As illustrated in FIG. 6, the work vehicle 10 executes predetermined work while autonomously traveling on a plurality of work routes included in the target route R. At the end point of each work route, the work vehicle 10 executes actions (described below) set in advance by the operator and switches to manual traveling to travel while turning on a turning route by manual steering by the operator.

The setting processing unit 714 sets the actions of the work vehicle 10 at the end point of each work route included in the target route R. Specifically, the acceptance processing unit 712 accepts, from the operator, each of a plurality of action items related to actions to be executed by the work vehicle 10 when the work vehicle 10 reaches a predetermined position corresponding to the end point of each work route. The setting processing unit 714 sets each of the plurality of action items on the basis of the operation of the operator. The plurality of action items include, for example, an action to output predetermined sound (buzzer sound or voice) from the work vehicle 10 (sound emission action), an action to display predetermined information on the operation device 17 (display action), and an action to stop the traveling of the work vehicle 10 (traveling control action). In the present invention, the plurality of action items may include at least one of the sound emission action, the display action, and the traveling control action, or may include at least the sound emission action, the display action, and the traveling control action.

For example, as illustrated in FIG. 7, the display processing unit 711 displays on the operation display unit 73 the setting screen P1 including the plurality of action items. The example illustrated in FIG. 7 includes a selection column K1 for selecting whether to output buzzer sound when the work vehicle 10 approaches the end point of the work route, a selection column K2 for selecting whether to display information indicating that the work vehicle 10 approaches the end point of the work route when the work vehicle 10 approaches the end point, and a selection column K3 for selecting whether to stop the traveling of the work vehicle 10 when the work vehicle 10 reaches the end point of the work route.

For example, in a case where the operator sets the selection column K1 of the action item "buzzer notification" to "ON" in the setting screen P1, the operation control unit 71 causes the operation device 17 or a speaker mounted on the work vehicle 10 to output buzzer sound when the work vehicle 10 approaches the end point of each work route (straight route). Moreover, when accepting a predetermined operation (stop operation) from the operator after the buzzer sound is output, the operation control unit 71 stops the output of the buzzer sound. The work vehicle 10 outputs the buzzer sound each time the work vehicle 10 approaches the end point of each work route.

Moreover, for example, in a case where the operator sets the selection column K2 of the action item "displaying on display" to "ON" in the setting screen P1, the display processing unit 711 displays on the operation display unit 73 a message indicating that the work vehicle 10 approaches the end point of each work route (straight route) when the work vehicle 10 approaches the end point. For example, as illustrated in FIG. 8, the display processing unit 711 displays on the travel screen D2 a message "near end point." The work vehicle 10 displays the message each time the work vehicle 10 approaches the end point of each work route.

Moreover, for example, in a case where the operator sets the selection column K3 of the action item "vehicle stop" to "ON" in the setting screen P1, the vehicle control device 11 stops the traveling of the work vehicle 10 when the work vehicle 10 reaches the end point of each work route (straight route). In this case, the work vehicle 10 temporarily stops when the work vehicle 10 autonomously travels on the work route Ra1 illustrated in FIG. 6, for example, and reaches the end point of the work route Ra1, and manually travels on the turning route Rc1 when the operator switches to the manual traveling mode and performs manual steering. The work vehicle 10 automatically stops each time the work vehicle 10 reaches the end point of each work route.

The operator can set each of the plurality of action items to "ON" or "OFF" in the setting screen P1. Accordingly, the operator can freely set each action item in consideration of the work contents, the work efficiency, the safety of work, and the like, thereby improving the operability. The operator may be capable of setting each of the plurality of action items to "ON" or "OFF" for each work route. Accordingly, for example, only when the work vehicle 10 approaches or reaches the end point of a specific work route, the buzzer sound can be output, the message can be displayed, or the work vehicle 10 can be stopped.

In the autonomous traveling system according to the present embodiment, when the operator sets the action item of the vehicle stop to "ON," the acceptance processing unit 712 may further accept, from the operator, an operation to set the action of the work machine 14. That is, the acceptance processing unit 712 may accept a setting operation of action contents to be executed by the work machine 14 in association with the traveling stop action of the work vehicle 10. For example, when the acceptance processing unit 712 accepts, from the operator, an operation to set the action item "vehicle stop" to "ON" (refer to FIG. 7), the display processing unit 711 displays the setting screen P2 illustrated in FIG. 9. The setting screen P2 includes a selection column K4 for selecting whether to stop the PTO (stop the rotating action of the PTO shaft to block the transmission of the driving force to the work machine 14) and a selection column K5 for selecting whether to lift the work machine 14.

Among work machines 14, there is a work machine 14 in which the driving is preferably not automatically stopped or the work height is preferably not changed. Thus, the operator may be capable of performing a setting such that such a work machine 14 is mounted on the work vehicle 10. Moreover, the setting processing unit 714 may set a preferable state as a default when the work vehicle 10 and the work machine 14 communicate with each other and the work machine 14 as described above is determined to be mounted. Moreover, control may be performed such that the operator cannot perform a setting.

Moreover, when the operator performs a setting to lift the work machine 14, the setting processing unit 714 may perform a setting to stop the PTO in conjunction with the setting. Accordingly, since the PTO is automatically stopped and the action of the work machine 14 is stopped in accordance with the lifting of the work machine 14, the work machine 14 can be prevented from continuing to drive while being lifted. However, the operator may be capable of selecting whether to stop the PTO in conjunction with the lifting of the work machine 14.

For example, in a case where the operator sets the selection column K4 of the action item "PTO stop" to "ON" in the setting screen P2 (refer to FIG. 9), the vehicle control device 11 stops the traveling of the work vehicle 10 and stops the driving of the PTO to stop the action of the work machine 14 (for example, tillage work) when the work vehicle 10 reaches the end point of each work route. In this case, the work vehicle 10 temporarily stops and stops the action of the work machine 14 when the work vehicle 10 autonomously travels on the work route Ra1 illustrated in FIG. 6, for example, and reaches the end point of the work route Ra1, and manually travels on the turning route Rc1 when the operator switches to the manual traveling mode.

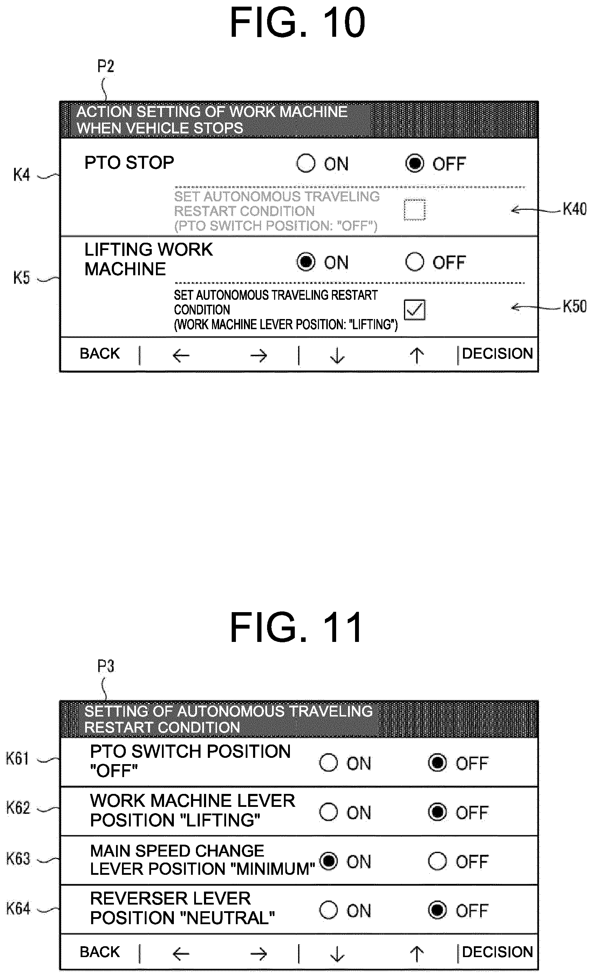

Moreover, for example, in a case where the operator sets the selection column K5 of the action item "lifting work machine" to "ON" in the setting screen P2 (refer to FIG. 10), the vehicle control device 11 stops the traveling of the work vehicle 10 and lifts the work machine 14 when the work vehicle 10 reaches the end point of each work route. Moreover, the vehicle control device 11 may stop the driving of the work machine 14 (stop the PTO) in conjunction with the lifting of the work machine 14. In this case, the work vehicle 10 temporarily stops, lifts the work machine 14, and stops the driving of the work machine 14 when the work vehicle 10 autonomously travels on the work route Ra1 illustrated in FIG. 6, for example, and reaches the end point of the work route Ra1, and manually travels on the turning route Rc1 when the operator switches to the manual traveling mode.

According to the setting operations in the setting screen P2 illustrated in FIG. 9 and FIG. 10, for example, the operator can select whether to stop or continue the work by the work machine 14 when the work vehicle 10 stops at the end point of the work route. In a case where the operator performs a setting to stop the traveling of the work vehicle 10 and a setting to stop the work by the work machine 14, when the work vehicle 10 autonomously travels on the work route and reaches the end point, the vehicle control device 11 stops the work vehicle 10 and stops the work by the work machine 14. Moreover, in a case where the operator performs a setting to stop the traveling of the work vehicle 10 and a setting to stop the transmission of the driving force to the work machine 14 or a setting to lift the work machine 14, when the work vehicle 10 autonomously travels on the work route and reaches the end point, the vehicle control device 11 stops the work vehicle 10 and stops the transmission of the driving force to the work machine 14 or lifts the work machine 14 and stops the driving of the work machine 14.

Accordingly, a state where the work machine 14 continues to be driven even though the work vehicle 10 has stopped the traveling at the end point of the work route can be avoided. The operator can freely set the action items related to "PTO stop" and "lifting work machine" according to the work contents, the type of the work machine 14, and the like.

Moreover, in the autonomous traveling system according to the present embodiment, when the operator sets the action item "vehicle stop" to "ON," the acceptance processing unit 712 may further accept, from the operator, a condition for switching the work vehicle 10 from the manual traveling mode to the autonomous traveling mode, that is, a condition for restarting the autonomous traveling at the start point of the work route after the manual traveling on the non-work route. The condition for restarting the autonomous traveling of the work vehicle 10 includes at least one of the following: the operation position of the PTO switch 13S for switching ON/OFF of the transmission of the driving force to the work machine 14 is the "OFF" position; the position of the lifting-lowering lever 14L for switching the lifting-lowering position of the work machine 14 is the "lifting" position; the position of the main speed change lever 13L for changing the speed of the work vehicle 10 is the "minimum speed" position (foremost position); and the position of the reverser lever for switching between forward movement and backward movement of the work vehicle 10 is the "neutral" position.

For example, on the setting screen P2 (refer to FIG. 9 and FIG. 10), the display processing unit 711 displays a selection column K40 for selecting whether to set the autonomous traveling restart condition in association with the selection column K4 of the action item "PTO stop" and displays a selection column K50 for selecting whether to set the autonomous traveling restart condition in association with the selection column K5 of the action item "lifting work machine." The display processing unit 711 may display the selection column K40 in a selectable manner when the action item "PTO stop" is set to "ON" and may display the selection column K50 in a selectable manner when the action item "lifting work machine" is set to "ON." The display processing unit 711 may display the selection column K40 in a non-selectable manner (for example, gray-out display) when the action item "PTO stop" is set to "OFF" and may display the selection column K50 in a non-selectable manner (for example, gray-out display) when the action item "lifting work machine" is set to "OFF."

The autonomous traveling restart condition corresponding to the action item "PTO stop" is "the operation position of the PTO switch 13S (refer to FIG. 3) is the "OFF" position." When the operator checks the selection column K40 (refer to FIG. 9), the setting processing unit 714 sets the autonomous traveling restart condition. In this case, when the work vehicle 10 is positioned at the start point of the work route and the PTO switch 13S is operated to the "OFF" position by the operator, the vehicle control device 11 determines that the autonomous traveling restart condition is satisfied and restarts the autonomous traveling on the work route. Moreover, when the PTO switch 13S is changed from the "OFF" position to the "ON" position by the operator, the vehicle control device 11 restarts the driving of the PTO to restart the work by the work machine 14.

In a case where a setting is performed such that the work vehicle 10 stops at the end point of the work route and the driving of the PTO is stopped, when the work vehicle 10 stops at the end point of the work route, the PTO switch 13S is maintained at the "ON" position although the driving of the PTO is stopped. Thus, for example, in a case where the operator unchecks the selection column K40 and does not set the autonomous traveling restart condition corresponding to the action item "PTO stop," when the work vehicle 10 is positioned at the start point of the work route, the vehicle control device 11 restarts the autonomous traveling on the work route and also automatically restarts the driving of the PTO (the work by the work machine 14).

Moreover, the autonomous traveling restart condition corresponding to the action item "lifting work machine" is "the operation position of the lifting-lowering lever 14L (refer to FIG. 3) is the "lifting" position." When the operator checks the selection column K50 (refer to FIG. 10), the setting processing unit 714 sets the autonomous traveling restart condition. In this case, when the work vehicle 10 is positioned at the start point of the work route and the lifting-lowering lever 14L is operated to the "lifting" position by the operator, the vehicle control device 11 determines that the autonomous traveling restart condition is satisfied and restarts the autonomous traveling on the work route. Moreover, when the lifting-lowering lever 14L is changed from the "lifting" position to the "lowering" position by the operator, the vehicle control device 11 restarts the work by the work machine 14.

In a case where a setting is performed such that the work vehicle 10 stops at the end point of the work route and the work machine 14 is lifted, when the work vehicle 10 stops at the end point of the work route, the lifting-lowering lever 14L is maintained at the "lowering" position although the work machine 14 is lifted. Thus, for example, in a case where the operator unchecks the selection column K50 and does not set the autonomous traveling restart condition corresponding to the action item "lifting work machine," when the work vehicle 10 is positioned at the start point of the work route, the vehicle control device 11 restarts the autonomous traveling on the work route and also automatically restarts the work by the work machine 14.

As described above, the operator sets the autonomous traveling restart condition when the operator wants to ensure the safety by preventing the work from being automatically restarted when the traveling is switched from the manual traveling to the autonomous traveling. In this case, when the work vehicle 10 reaches the start point of the work route and satisfies the autonomous traveling restart condition, the work vehicle 10 restarts the autonomous traveling.

In contrast, the operator does not set the autonomous traveling restart condition when the operator wants to improve the work efficiency by automatically restarting the work when the traveling is switched from the manual traveling to the autonomous traveling. In this case, when the work vehicle 10 reaches the start point of the work route, the work vehicle 10 restarts the autonomous traveling. The operator can select whether to set the autonomous traveling restart condition in consideration of the safety and the work efficiency.

As another embodiment, the display processing unit 711 may display the setting screen P3 (refer to FIG. 11) of the autonomous traveling restart condition. For example, when the operator sets the action item of the vehicle stop to "ON" (refer to FIG. 7), the display processing unit 711 displays the setting screen P3, and the acceptance processing unit 712 may accept, from the operator, a setting operation of the autonomous traveling restart condition. The setting screen P3 includes a selection column K61 in which "the operation position of the PTO switch 13S is the "OFF" position" is the autonomous traveling restart condition, a selection column K62 in which "the operation position of the work machine lever (lifting-lowering lever 14L) is the "lifting" position" is the autonomous traveling restart condition, a selection column K63 in which "the operation position of the main speed change lever 13L is the "minimum" position" is the autonomous traveling restart condition, and a selection column K64 in which "the operation position of the reverser lever is the "neutral" position" is the autonomous traveling restart condition.

For example, in a case where the operator sets the selection column K61 to "ON," when the work vehicle 10 reaches the start point of the work route and the PTO switch 13S is operated to the "OFF" position by the operator, the vehicle control device 11 determines that the autonomous traveling restart condition is satisfied and restarts the autonomous traveling. In a case where the operator sets the selection column K61 to "OFF," when the work vehicle 10 reaches the start point of the work route, the vehicle control device 11 restarts the autonomous traveling and restarts the work by the work machine 14.

Moreover, for example, in a case where the operator sets the selection column K62 to "ON," when the work vehicle 10 reaches the start point of the work route and the lifting-lowering lever 14L is operated to the "lifting" position by the operator, the vehicle control device 11 determines that the autonomous traveling restart condition is satisfied and restarts the autonomous traveling. In a case where the operator sets the selection column K62 to "OFF," when the work vehicle 10 reaches the start point of the work route, the vehicle control device 11 restarts the autonomous traveling and restarts the work by the work machine 14.

Moreover, for example, in a case where the operator sets the selection column K63 to "ON," when the work vehicle 10 reaches the start point of the work route and the main speed change lever 13L is operated to the "minimum" position by the operator, the vehicle control device 11 determines that the autonomous traveling restart condition is satisfied and restarts the autonomous traveling at the minimum speed. In a case where the operator sets the selection column K63 to "OFF," when the work vehicle 10 reaches the start point of the work route, the vehicle control device 11 restarts the autonomous traveling at a speed corresponding to the current operation position of the main speed change lever 13L.

Moreover, for example, in a case where the operator sets the selection column K64 to "ON," when the work vehicle 10 reaches the start point of the work route and the reverser lever is operated to the "neutral" position by the operator, the vehicle control device 11 determines that the autonomous traveling restart condition is satisfied and restarts the autonomous traveling. In this case, when the reverser lever is operated to the "forward movement" position by the operator, the vehicle control device 11 starts the autonomous traveling by the forward movement. In a case where the operator sets the selection column K64 to "OFF," when the work vehicle 10 reaches the start point of the work route, the vehicle control device 11 starts the autonomous traveling in a direction corresponding to the current operation position of the reverser lever (for example, "forward movement" direction).

The operator may set any one of the autonomous traveling restart conditions to "ON" or may set a plurality of the autonomous traveling restart conditions to "ON" in the setting screen P3 illustrated in FIG. 11.

In a case where the operator sets a plurality of the autonomous traveling restart conditions to "ON," when all of the plurality of the autonomous traveling restart conditions are satisfied, the vehicle control device 11 restarts the autonomous traveling.

### [Autonomous Traveling Processing]

Hereinafter, with reference to FIG. 12, an example of the autonomous traveling processing executed by the vehicle control device 11 will be described. The present invention may be understood as an invention of an autonomous traveling method in which the vehicle control device 11 executes a part or all of the autonomous traveling processing or an invention of an autonomous traveling program for causing the vehicle control device 11 to execute a part or all of the autonomous traveling method. The autonomous traveling method is an example of the traveling control method of the present invention, and the autonomous traveling program is an example of the traveling control program of the present invention.

In step S1, the vehicle control device 11 determines whether the work vehicle 10 is in a state where autonomous traveling is possible. When the vehicle control device 11 determines that the work vehicle 10 is in a state where autonomous traveling is possible (S1: Yes), the processing proceeds to step S2. The vehicle control device 11 waits until the work vehicle 10 is in a state where autonomous traveling is possible (S1: No). Specifically, when the work vehicle 10 satisfies the autonomous traveling start condition, the vehicle control device 11 determines that the work vehicle 10 is in a state where autonomous traveling is possible.

In step S2, the vehicle control device 11 causes the work vehicle 10 to start autonomous traveling in accordance with the target route R. Specifically, when the work vehicle 10 satisfies the autonomous traveling start condition and the operator issues the traveling start instruction, the vehicle control device 11 starts the autonomous traveling processing corresponding to the target route R (refer to FIG. 6) set in advance. For example, the vehicle control device 11 causes the work vehicle 10 to autonomously travel in accordance with the work route (straight route) by autonomous steering. Moreover, the vehicle control device 11 drives the work machine 14 to execute predetermined work (for example, tillage work) when the work vehicle 10 autonomously travels on the work route.

Next, in step S3, the vehicle control device 11 determines whether the work vehicle 10 approaches the end point of the work route. Specifically, the vehicle control device 11 determines whether a distance from the current position of the work vehicle 10 that autonomously travels on the work route to the end point of the work route is less than a predetermined distance. When the vehicle control device 11 determines that the work vehicle 10 approaches the end point of the work route (S3: Yes), the processing proceeds to step S4. In contrast, the vehicle control device 11 continues the autonomous traveling until the work vehicle 10 approaches the end point of the work route (S3:No).

In step S4, the vehicle control device 11 notifies the outside of information indicating that the work vehicle 10 approaches the end point of the work route. For example, in a case where the operator sets the selection column K1 of the action item "buzzer notification" to "ON" in the setting screen P1 (refer to FIG. 7), the vehicle control device 11 gives notification to the operation control unit 71 when the work vehicle 10 approaches the end point of the work route. When acquiring the notification, the operation control unit 71 causes the operation device 17 or the speaker mounted on the work vehicle 10 to output buzzer sound.

Moreover, for example, in a case where the operator sets the selection column K2 of the action item "displaying on display" to "ON" in the setting screen P1 (refer to FIG. 7), the vehicle control device 11 gives notification to the operation control unit 71 when the work vehicle 10 approaches the end point of the work route. When acquiring the notification, the operation control unit 71 displays on the operation display unit 73 a message indicating that the work vehicle 10 approaches the end point (refer to FIG. 8).

As described above, when the work vehicle 10 approaches the end point of the work route, the vehicle control device 11 executes notification actions to notify the outside of predetermined information, such as an output action of buzzer sound and a display action of a message.

Next, in step S5, the vehicle control device 11 determines whether the work vehicle 10 reaches the end point of the work route. When the vehicle control device 11 determines that the work vehicle 10 reaches the end point of the work route (S5: Yes), the processing proceeds to step S6. In contrast, the vehicle control device 11 continues the notification processing until the work vehicle 10 reaches the end point of the work route (S5:No).

In step S6, the vehicle control device 11 stops the traveling of the work vehicle 10. Here, a case where the operator sets the selection column K3 of the action item "vehicle stop" to "ON" in the setting screen P1 (refer to FIG. 7) is illustrated. In this case, the vehicle control device 11 stops the traveling when the work vehicle 10 reaches the end point of the work route. Moreover, in a case where the operator sets the selection column K4 of the action item "PTO stop" to "ON" in the setting screen P2 (refer to FIG. 9), the vehicle control device 11 stops the PTO to stop the action of the work machine 14 when the work vehicle 10 reaches the end point of the work route. Moreover, in a case where the operator sets the selection column K5 of the action item "lifting work machine" to "ON" in the setting screen P2 (refer to FIG. 10), the vehicle control device 11 lifts the work machine 14 when the work vehicle 10 reaches the end point of the work route. Moreover, the vehicle control device 11 may stop the driving of the work machine 14 (stop the PTO) in conjunction with the lifting of the work machine 14.

Next, in step S7, the vehicle control device 11 switches the work vehicle 10 from the autonomous traveling mode to the manual traveling mode and causes the work vehicle 10 to manually travel by manual steering by the operator. For example, the vehicle control device 11 causes the work vehicle 10 to manually travel on the turning route from the end point of the work route toward the start point of the next work route in response to manual steering by the operator.

Next, in step S8, the vehicle control device 11 determines whether the work vehicle 10 satisfies the autonomous traveling restart condition. Here, a case where the operator sets the action item "PTO stop" to "ON" and sets the autonomous traveling restart condition by checking the selection column K40 in the setting screen P2 (refer to FIG. 9) is illustrated. In this case, when the work vehicle 10 reaches the start point of the work route and the PTO switch 13S is operated to the "OFF" position by the operator, the vehicle control device 11 determines that the autonomous traveling restart condition is satisfied (S8: Yes). When the work vehicle 10 does not reach the start point of the work route or when the PTO switch 13S is not operated to the "OFF" position by the operator, the vehicle control device 11 determines that the autonomous traveling restart condition is not satisfied (S8: No).

When the vehicle control device 11 determines that the work vehicle 10 satisfies the autonomous traveling restart condition (S8: Yes), the processing proceeds to step S9. The vehicle control device 11 continues the manual traveling processing until the vehicle control device 11 determines that the work vehicle 10 satisfies the autonomous traveling restart condition (S8: No).

In step S9, the vehicle control device 11 restarts the autonomous traveling of the work vehicle 10.

Here, when the operator adjusts the position of the work vehicle 10 to the start point of the work route by manual steering, operates the PTO switch 13S to the "OFF" position once, and then operates the PTO switch 13S to the "ON" position, at the start point of the work route, the vehicle control device 11 restarts the autonomous traveling and restarts the work by the work machine 14 by driving the PTO. Accordingly, the work vehicle 10 performs the work while autonomously traveling in accordance with the work route.

Next, in step S10, the vehicle control device 11 determines whether the work vehicle 10 finishes the work. When the vehicle control device 11 determines that the work vehicle 10 finishes the work (S10: Yes), the vehicle control device 11 finishes the autonomous traveling processing. When the vehicle control device 11 determines that the work vehicle 10 does not finish the work (S10: No), the vehicle control device 11 causes the work vehicle 10 to continue the autonomous traveling in accordance with the target route R, and the processing proceeds to step S3.

The vehicle control device 11 repeatedly executes the processing of steps S3 to S9 described above until the work vehicle 10 finishes the work. As described above, the vehicle control device 11 executes the autonomous traveling processing.

As described above, the autonomous traveling system according to the present embodiment accepts, from the operator, an operation to set each of a plurality of action items related to actions to be executed by the work vehicle 10 when the work vehicle 10 reaches a predetermined position corresponding to an end point of a work route on which the work vehicle 10 is caused to autonomously travel and sets each of the plurality of action items on the basis of the operation of the operator. For example, the autonomous traveling system accepts, from the operator, an operation to set each of a plurality of action items including at least one of an action to output predetermined sound from the work vehicle 10 when the work vehicle 10 approaches the end point of the work route, an action to display predetermined information (for example, a message "near end point") on the operation device 17 when the work vehicle 10 approaches the end point of the work route, and an action to stop traveling of the work vehicle 10 when the work vehicle 10 reaches the end point of the work route and sets each of the plurality of action items on the basis of the operation of the operator.

According to the above-described configuration, the operator can set whether to notify the outside of predetermined information when the work vehicle 10 approaches the end point of the work route and can set whether to stop the traveling of the work vehicle 10 when the work vehicle 10 reaches the end point of the work route. As described above, the operator can freely set the action (behavior) of the work vehicle 10 when switching from the autonomous traveling to the manual traveling. Thus, the operability of the work vehicle 10 can be improved.

### [Other Embodiments]

The present invention is not limited to the above-described embodiment. Hereinafter, other embodiments of the present invention will be described.

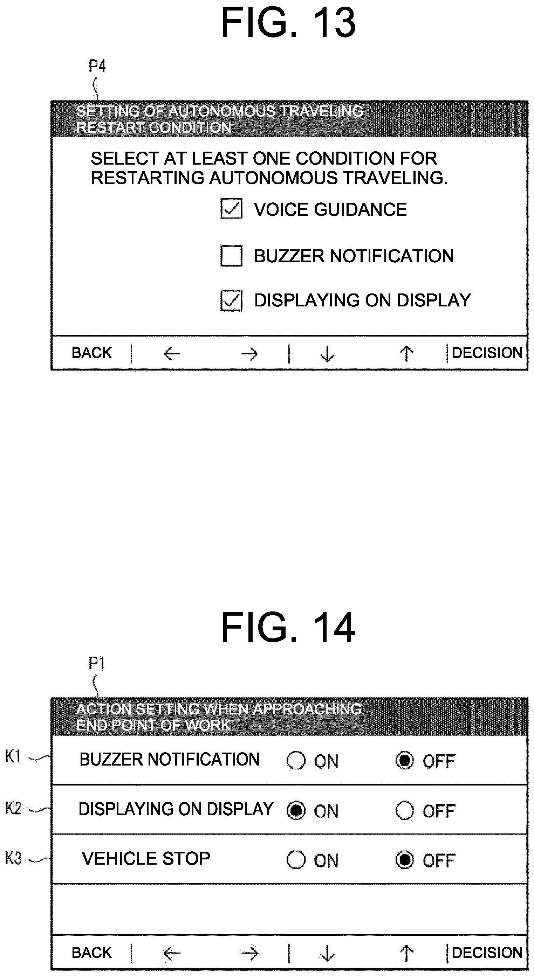

As another embodiment of the present invention, the autonomous traveling restart condition may be a condition related to the notification processing. For example, the display processing unit 711 may display a setting screen P4 illustrated in FIG. 13, and the acceptance processing unit 712 may accept, from the operator, a setting operation of the autonomous traveling restart condition. The setting screen P4 illustrated in FIG. 13 includes conditions (autonomous traveling restart conditions) of "outputting voice guidance," "outputting buzzer sound," and "displaying on display." In a case where at least one of the conditions is set by the operator in the setting screen P4 and processing (notification processing) that satisfies the condition is executed at the start point of the work route, the vehicle control device 11 restarts the autonomous traveling of the work vehicle 10. For example, in a case where the operator checks "voice guidance" and "displaying on display" to set the autonomous traveling restart condition, the vehicle control device 11 restarts the autonomous traveling of the work vehicle 10 when the work vehicle 10 reaches the start point of the work route and the operation control unit 71 performs voice guidance of a message indicating the restart of the autonomous traveling and displays the message on the operation display unit 73. As described above, the autonomous traveling system may be configured to permit the restart of the autonomous traveling on condition that the notification action to the operator is performed at the start point of the work route.

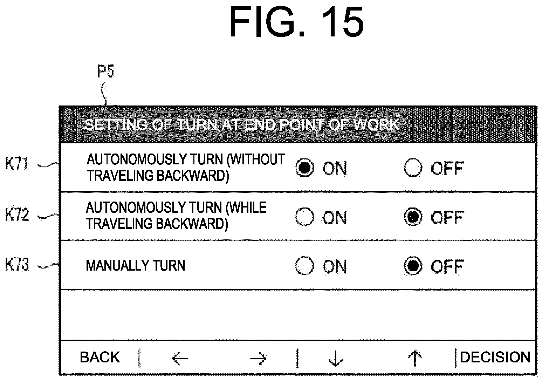

Moreover, as another embodiment of the present invention, when the operator sets the selection column K3 of the action item "vehicle stop" to "OFF" in the setting screen P1 (refer to FIG. 14), the display processing unit 711 may display a setting screen P5 (refer to FIG. 15) for setting a turning method of the work vehicle 10 at the end point of the work route. The setting screen P5 includes a selection column K71 for causing the work vehicle 10 to autonomously turn without traveling backward, a selection column K72 for causing the work vehicle 10 to autonomously turn while traveling backward, and a selection column K73 for causing the work vehicle 10 to manually turn. The operator can select a method of a turning action when the work vehicle 10 reaches the end point of the work route. The work vehicle 10 executes the turning action by the turning method selected by the operator in the setting screen P5 each time the work vehicle 10 reaches the end point of each work route.

The traveling control system of the present invention may be configured by the vehicle control device 11 and the operation device 17 or may be configured by only the vehicle control device 11 or only the operation device 17. Moreover, the traveling control system may be configured by a server including the respective processing units included in the vehicle control device 11 and the operation device 17.

### [Supplementary Notes of the Invention]

Hereinafter, a summary of the invention extracted from the embodiment will be described as supplementary notes. The configurations and processing functions described in the following supplementary notes can be selected, omitted, and combined as appropriate.

### <Supplementary Note 1>

A traveling control method executing:
accepting, from a user, an operation to set each of a plurality of action items related to actions to be executed by a work vehicle when the work vehicle reaches a predetermined position corresponding to an end point of a work route on which the work vehicle is caused to autonomously travel; and
setting each of the plurality of action items on the basis of the operation of the user.

### <Supplementary Note 2>

The traveling control method according to supplementary note 1, in which
the end point of the work route corresponds to a position of a start point of a non-work route on which the work vehicle is caused to manually travel, and
a start point of the work route corresponds to a position of an end point of the non-work route.

### <Supplementary Note 3>

The traveling control method according to supplementary note 1 or 2, in which
the plurality of action items include at least one of an action to output predetermined sound from the work vehicle, an action to display predetermined information on an operation terminal, and an action to stop traveling of the work vehicle.

### <Supplementary Note 4>

The traveling control method according to supplementary note 3, in which,
in a case where the user performs a setting to output the predetermined sound from the work vehicle, the predetermined sound is output from the work vehicle when the work vehicle autonomously travels on the work route and reaches the predetermined position.

### <Supplementary Note 5>

The traveling control method according to supplementary note 3 or 4, in which,
in a case where the user performs a setting to display the predetermined information on the operation terminal, the predetermined information is displayed on the operation terminal when the work vehicle autonomously travels on the work route and reaches the predetermined position.

### <Supplementary Note 6>

The traveling control method according to any one of supplementary notes 3 to 5, in which,
in a case where the user performs a setting to stop the traveling of the work vehicle, the traveling of the work vehicle is stopped when the work vehicle autonomously travels on the work route and reaches the predetermined position.

### <Supplementary Note 7>

The traveling control method according to any one of supplementary notes 3 to 6, in which,
in a case where the user performs a setting to stop the traveling of the work vehicle, an operation to set an action of a work machine is further accepted from the user.

### <Supplementary Note 8>

The traveling control method according to supplementary note 7, in which,
in a case where the user performs the setting to stop the traveling of the work vehicle and a setting to stop work by the work machine, the work vehicle is stopped and the work by the work machine is stopped when the work vehicle autonomously travels on the work route and reaches the predetermined position.

### <Supplementary Note 9>

The traveling control method according to supplementary note 8, in which,
in a case where the user performs the setting to stop the traveling of the work vehicle and a setting to stop transmission of driving force to the work machine or a setting to lift the work machine, the work vehicle is stopped and the transmission of the driving force to the work machine is stopped or the work machine is lifted when the work vehicle autonomously travels on the work route and reaches the predetermined position.

### <Supplementary Note 10>

The traveling control method according to any one of supplementary notes 3 to 9, in which,
in a case where the user performs the setting to stop the traveling of the work vehicle, an operation to set a condition for restarting the autonomous traveling of the work vehicle is further accepted from the user.

### <Supplementary Note 11>

The traveling control method according to supplementary note 10, in which
the condition for restarting the autonomous traveling of the work vehicle includes at least one of the following: an operation position of a switching operation tool for switching ON/OFF of the transmission of the driving force to the work machine is an OFF position; a position of a lifting-lowering operation tool for switching a lifting-lowering position of the work machine is a lifting position; a position of a speed operation tool for changing a speed of the work vehicle is a minimum speed position; and a position of a direction operation tool for switching between forward movement and backward movement of the work vehicle is a neutral position.

### REFERENCE SIGNS LIST

10 work vehicle
11 vehicle control device
12 storage unit
13 traveling device
13L main speed change lever (speed operation tool)
13S PTO switch (switching operation tool)
14 work machine
14L lifting-lowering lever (lifting-lowering operation tool)
16 positioning device
17 operation device
71 operation control unit
72 storage unit
73 operation display unit
711 display processing unit
712 acceptance processing unit
713 generation processing unit
714 setting processing unit
F field
L1 reference line
D1 operation screen
D2 travel screen
P1 to P5 setting screen
R target route
Ra1 to Ra12 work route
Rc1, Rc2 turning route (non-work route)

## Claims

1. A traveling control method executing:
accepting, from a user, an operation to set each of a plurality of action items related to actions to be executed by a work vehicle when the work vehicle reaches a predetermined position corresponding to an end point of a work route on which the work vehicle is caused to autonomously travel; and
setting each of the plurality of action items on the basis of the operation of the user.

2. The traveling control method according to claim 1, wherein
the end point of the work route corresponds to a position of a start point of a non-work route on which the work vehicle is caused to manually travel, and
a start point of the work route corresponds to a position of an end point of the non-work route.

3. The traveling control method according to claim 1, wherein
the plurality of action items include at least one of an action to output predetermined sound from the work vehicle, an action to display predetermined information on an operation terminal, and an action to stop traveling of the work vehicle.

4. The traveling control method according to claim 3, wherein,
in a case where the user performs a setting to output the predetermined sound from the work vehicle, the predetermined sound is output from the work vehicle when the work vehicle autonomously travels on the work route and reaches the predetermined position.

5. The traveling control method according to claim 3, wherein,
in a case where the user performs a setting to display the predetermined information on the operation terminal, the predetermined information is displayed on the operation terminal when the work vehicle autonomously travels on the work route and reaches the predetermined position.

6. The traveling control method according to claim 3, wherein,
in a case where the user performs a setting to stop the traveling of the work vehicle, the traveling of the work vehicle is stopped when the work vehicle autonomously travels on the work route and reaches the predetermined position.

7. The traveling control method according to claim 3, wherein,
in a case where the user performs a setting to stop the traveling of the work vehicle, an operation to set an action of a work machine is further accepted from the user.

8. The traveling control method according to claim 7, wherein,
in a case where the user performs the setting to stop the traveling of the work vehicle and a setting to stop work by the work machine, the work vehicle is stopped and the work by the work machine is stopped when the work vehicle autonomously travels on the work route and reaches the predetermined position.

9. The traveling control method according to claim 8, wherein,
in a case where the user performs the setting to stop the traveling of the work vehicle and a setting to stop transmission of driving force to the work machine or a setting to lift the work machine, the work vehicle is stopped and the transmission of the driving force to the work machine is stopped or the work machine is lifted when the work vehicle autonomously travels on the work route and reaches the predetermined position.

10. The traveling control method according to any one of claims 3 to 9, wherein,
in a case where the user performs the setting to stop the traveling of the work vehicle, an operation to set a condition for restarting the autonomous traveling of the work vehicle is further accepted from the user.

11. The traveling control method according to claim 10, wherein
the condition for restarting the autonomous traveling of the work vehicle includes at least one of the following: an operation position of a switching operation tool for switching ON/OFF of the transmission of the driving force to the work machine is an OFF position; a position of a lifting-lowering operation tool for switching a lifting-lowering position of the work machine is a lifting position; a position of a speed operation tool for changing a speed of the work vehicle is a minimum speed position; and a position of a direction operation tool for switching between forward movement and backward movement of the work vehicle is a neutral position.

12. A traveling control system comprising:
an acceptance processing unit that accepts, from a user, an operation to set each of a plurality of action items related to actions to be executed by a work vehicle when the work vehicle reaches a predetermined position corresponding to an end point of a work route on which the work vehicle is caused to autonomously travel; and
a setting processing unit that sets each of the plurality of action items on the basis of the operation of the user.

13. A traveling control program for causing one or more processors to execute:
accepting, from a user, an operation to set each of a plurality of action items related to actions to be executed by a work vehicle when the work vehicle reaches a predetermined position corresponding to an end point of a work route on which the work vehicle is caused to autonomously travel; and
setting each of the plurality of action items on the basis of the operation of the user.

## Patentansprüche

1. Fahrsteuerungsverfahren, das Folgendes ausführt:
Annehmen eines Bedienvorgangs von einem Benutzer, um jedes einzelne aus einer Vielzahl von Aktionselementen einzustellen, die sich auf von einem Arbeitsfahrzeug auszuführende Aktionen beziehen, wenn das Arbeitsfahrzeug eine vorbestimmte Position erreicht, die einem Endpunkt einer Arbeitsstrecke, auf der das Arbeitsfahrzeug veranlasst wird, autonom zu fahren, entspricht; und
Einstellen jedes einzelnen aus der Vielzahl von Aktionselementen basierend auf dem Bedienvorgang des Benutzers.

2. Fahrsteuerungsverfahren nach Anspruch 1, wobei
der Endpunkt der Arbeitsstrecke einer Position eines Startpunkts einer Nicht-Arbeitsstrecke entspricht, auf der das Arbeitsfahrzeug veranlasst wird, manuell zu fahren, und
ein Startpunkt der Arbeitsstrecke einer Position eines Endpunkts der Nicht-Arbeitsstrecke entspricht.

3. Fahrsteuerungsverfahren nach Anspruch 1, wobei
die Vielzahl von Aktionselementen mindestens eines von einer Aktion zur Ausgabe eines vorbestimmten Tons aus dem Arbeitsfahrzeug, einer Aktion zur Anzeige vorbestimmter Informationen auf einem Bedienterminal und einer Aktion zum Anhalten des Fahrens des Arbeitsfahrzeugs umfasst.

4. Fahrsteuerungsverfahren nach Anspruch 3, wobei
in einem Fall, in dem der Benutzer eine Einstellung zur Ausgabe des vorbestimmten Tons aus dem Arbeitsfahrzeug vornimmt, der vorbestimmte Ton aus dem Arbeitsfahrzeug ausgegeben wird, wenn das Arbeitsfahrzeug autonom auf der Arbeitsstrecke fährt und die vorbestimmte Position erreicht.

5. Fahrsteuerungsverfahren nach Anspruch 3, wobei
in einem Fall, in dem der Benutzer eine Einstellung zur Anzeige der vorbestimmten Informationen auf dem Bedienterminal vornimmt, die vorbestimmten Informationen auf dem Bedienterminal angezeigt werden, wenn das Arbeitsfahrzeug autonom auf der Arbeitsstrecke fährt und die vorbestimmte Position erreicht.

6. Fahrsteuerungsverfahren nach Anspruch 3, wobei
in einem Fall, in dem der Benutzer eine Einstellung zum Anhalten des Fahrens des Arbeitsfahrzeugs vornimmt, das Fahren des Arbeitsfahrzeugs angehalten wird, wenn das Arbeitsfahrzeug autonom auf der Arbeitsstrecke fährt und die vorbestimmte Position erreicht.

7. Fahrsteuerungsverfahren nach Anspruch 3, wobei
in einem Fall, in dem der Benutzer eine Einstellung zum Anhalten des Fahrens des Arbeitsfahrzeugs vornimmt, ferner ein Bedienvorgang vom Benutzer zur Einstellung einer Aktion einer Arbeitsmaschine angenommen wird.

8. Fahrsteuerungsverfahren nach Anspruch 7, wobei
in einem Fall, in dem der Benutzer die Einstellung zum Anhalten des Fahrens des Arbeitsfahrzeugs und eine Einstellung zum Anhalten der Arbeit der Arbeitsmaschine vornimmt, das Arbeitsfahrzeug angehalten wird und die Arbeit der Arbeitsmaschine angehalten wird, wenn das Arbeitsfahrzeug autonom auf der Arbeitsstrecke fährt und die vorbestimmte Position erreicht.

9. Fahrsteuerungsverfahren nach Anspruch 8, wobei
in einem Fall, in dem der Benutzer die Einstellung zum Anhalten des Fahrens des Arbeitsfahrzeugs und eine Einstellung zum Anhalten der Übertragung der Antriebskraft auf die Arbeitsmaschine oder eine Einstellung zum Anheben der Arbeitsmaschine vornimmt, das Arbeitsfahrzeug angehalten wird und die Übertragung der Antriebskraft auf die Arbeitsmaschine angehalten wird oder die Arbeitsmaschine angehoben wird, wenn das Arbeitsfahrzeug autonom auf der Arbeitsstrecke fährt und die vorbestimmte Position erreicht.

10. Fahrsteuerungsverfahren nach einem der Ansprüche 3 bis 9, wobei
in einem Fall, in dem der Benutzer die Einstellung zum Anhalten des Fahrens des Arbeitsfahrzeugs vornimmt, ferner ein Bedienvorgang vom Benutzer zur Einstellung einer Bedingung für das Wiederaufnehmen des autonomen Fahrens des Arbeitsfahrzeugs angenommen wird.

11. Fahrsteuerungsverfahren nach Anspruch 10, wobei
die Bedingung für das Wiederaufnehmen des autonomen Fahrens des Arbeitsfahrzeugs mindestens eines von Folgendem umfasst: eine Bedienposition eines Tools für Schaltbedienvorgänge zum EIN-/AUS-Schalten der Übertragung der Antriebskraft auf die Arbeitsmaschine ist eine AUS-Position; eine Position eines Tools für Anhebe- und Absenkbedienvorgänge zum Umschalten einer Anhebe- und Absenkposition der Arbeitsmaschine ist eine Anhebeposition; eine Position eines Tools für Geschwindigkeitsbedienvorgänge zum Ändern der Geschwindigkeit des Arbeitsfahrzeugs ist eine Mindestgeschwindigkeitsposition; und eine Position eines Tools für Richtungsbedienvorgänge zum Umschalten zwischen Vorwärts- und Rückwärtsbewegung des Arbeitsfahrzeugs ist eine Neutralposition.

12. Fahrsteuerungssystem, das Folgendes umfasst:
eine Annahmeverarbeitungseinheit, die von einem Benutzer einen Bedienvorgang annimmt, um jedes aus einer Vielzahl von Aktionselementen einzustellen, die sich auf von einem Arbeitsfahrzeug auszuführende Aktionen beziehen, wenn das Arbeitsfahrzeug eine vorbestimmte Position erreicht, die einem Endpunkt einer Arbeitsstrecke, auf der das Arbeitsfahrzeug veranlasst wird, autonom zu fahren, entspricht; und
eine Einstellverarbeitungseinheit, die jedes einzelne aus der Vielzahl von Aktionselementen basierend auf dem Bedienvorgang des Benutzers einstellt.

13. Fahrsteuerungsprogramm zum Veranlassen eines oder mehrerer Prozessoren, Folgendes auszuführen:
Annehmen eines Bedienvorgangs von einem Benutzer, um jedes aus einer Vielzahl von Aktionselementen einzustellen, die sich auf von einem Arbeitsfahrzeug auszuführende Aktionen beziehen, wenn das Arbeitsfahrzeug eine vorbestimmte Position erreicht, die einem Endpunkt einer Arbeitsstrecke, auf der das Arbeitsfahrzeug veranlasst wird, autonom zu fahren, entspricht; und
Einstellen jedes einzelnen aus der Vielzahl von Aktionselementen basierend auf dem Bedienvorgang des Benutzers.

## Revendications

1. Procédé de contrôle de déplacement mettant en œuvre :
l'acceptation, de la part d'un utilisateur, d'une commande visant à paramétrer chacun d'une pluralité d'éléments d'action liés à des actions à mettre en œuvre par un véhicule de travail lorsque le véhicule de travail atteint une position prédéterminée correspondant à un point d'arrivée d'un trajet de travail sur lequel le véhicule de travail est amené à se déplacer de manière autonome ; et
le paramétrage de chacun de la pluralité d'éléments d'action sur la base de la commande de l'utilisateur.

2. Procédé de contrôle de déplacement selon la revendication 1, dans lequel
le point d'arrivée du trajet de travail correspond à une position d'un point de départ d'un trajet hors-travail sur lequel le véhicule de travail est amené à se déplacer manuellement, et
un point de départ du trajet de travail correspond à une position d'un point d'arrivée du trajet hors-travail.

3. Procédé de contrôle de déplacement selon la revendication 1, dans lequel
la pluralité d'éléments d'action inclut au moins l'un parmi une action visant à émettre un son prédéterminé depuis le véhicule de travail, une action visant à afficher une information prédéterminée sur un terminal de commande, et une action visant à interrompre le déplacement du véhicule de travail.

4. Procédé de contrôle de déplacement selon la revendication 3, dans lequel,
dans le cas où l'utilisateur effectue un paramétrage visant à émettre le son prédéterminé depuis le véhicule de travail, le son prédéterminé est émis depuis le véhicule de travail lorsque le véhicule de travail se déplace de manière autonome sur le trajet de travail et atteint la position prédéterminée.

5. Procédé de contrôle de déplacement selon la revendication 3, dans lequel,
dans le cas où l'utilisateur effectue un paramétrage visant à afficher l'information prédéterminée sur le terminal de commande, l'information prédéterminée est affichée sur le terminal de commande lorsque le véhicule de travail se déplace de manière autonome sur le trajet de travail et atteint la position prédéterminée.

6. Procédé de contrôle de déplacement selon la revendication 3, dans lequel,
dans le cas où l'utilisateur effectue un paramétrage visant à interrompre le déplacement du véhicule de travail, le déplacement du véhicule de travail est interrompu lorsque le véhicule de travail se déplace de manière autonome sur le trajet de travail et atteint la position prédéterminée.

7. Procédé de contrôle de déplacement selon la revendication 3, dans lequel,
dans le cas où l'utilisateur effectue un paramétrage visant à interrompre le déplacement du véhicule de travail, une commande visant à paramétrer une action d'une machine de travail est en outre acceptée de la part de l'utilisateur.

8. Procédé de contrôle de déplacement selon la revendication 7, dans lequel,
dans le cas où l'utilisateur effectue le paramétrage visant à interrompre le déplacement du véhicule de travail et un paramétrage visant à interrompre le travail par la machine de travail, le véhicule de travail est interrompu et le travail par la machine de travail est interrompu lorsque le véhicule de travail se déplace de manière autonome sur le trajet de travail et atteint la position prédéterminée.

9. Procédé de contrôle de déplacement selon la revendication 8, dans lequel,
dans le cas où l'utilisateur effectue le paramétrage visant à interrompre le déplacement du véhicule de travail et un paramétrage visant à interrompre la transmission de la force motrice à la machine de travail ou un paramétrage visant à relever la machine de travail, le véhicule de travail est interrompu et la transmission de la force motrice à la machine de travail est interrompue ou la machine de travail est relevée lorsque le véhicule de travail se déplace de manière autonome sur le trajet de travail et atteint la position prédéterminée.

10. Procédé de contrôle de déplacement selon l'une quelconque des revendications 3 à 9, dans lequel,
dans le cas où l'utilisateur effectue le paramétrage visant à interrompre le déplacement du véhicule de travail, une commande visant à paramétrer une condition de redémarrage du déplacement autonome du véhicule de travail est en outre acceptée de la part de l'utilisateur.

11. Procédé de contrôle de déplacement selon la revendication 10, dans lequel
la condition de redémarrage du déplacement autonome du véhicule de travail inclut au moins l'un parmi ce qui suit : une position de commande d'un organe de commande de commutation pour commuter entre ON/OFF la transmission de la force motrice à la machine de travail est une position OFF ; une position d'un organe de commande de levage-abaissement pour commuter la position de levage-abaissement de la machine de travail est une position de levage ; une position d'un organe de commande de vitesse pour modifier la vitesse du véhicule de travail est une position de vitesse minimale ; et une position d'un organe de commande de direction pour commuter entre une marche avant et une marche arrière du véhicule de travail est une position neutre.

12. Système de contrôle de déplacement comprenant :
une unité de traitement d'acceptation qui accepte, de la part d'un utilisateur, une commande visant à paramétrer chacun d'une pluralité d'éléments d'action liés à des actions à mettre en œuvre par un véhicule de travail lorsque le véhicule de travail atteint une position prédéterminée correspondant à un point d'arrivée d'un trajet de travail sur lequel le véhicule de travail est amené à se déplacer de manière autonome ; et
une unité de traitement de paramétrage qui paramètre chacun de la pluralité d'éléments d'action sur la base de la commande de l'utilisateur.

13. Programme de contrôle de déplacement destiné à amener un ou plusieurs processeurs à mettre en œuvre :
l'acceptation, de la part d'un utilisateur, d'une commande visant à paramétrer chacun d'une pluralité d'éléments d'action liés à des actions à mettre en œuvre par un véhicule de travail lorsque le véhicule de travail atteint une position prédéterminée correspondant à un point d'arrivée d'un trajet de travail sur lequel le véhicule de travail est amené à se déplacer de manière autonome ; et
le paramétrage de chacun de la pluralité d'éléments d'action sur la base de la commande de l'utilisateur.
